# EUROPEAN PATENT APPLICATION

(11) **EP 0 656 501 A2**
(43) Date of publication of application: **07.06.1995**
(21) Application number: 94308903.7
(22) Date of filing: 01.12.1994
(51) Int. Cl.: F16L 3/22, F16L 3/237

(54) **Fastener for wire harness**

(30) Priority: 02.12.1993 JP 64588/93 U
(71) Applicant: EMHART INC., Newark, Delaware 19711 (US)
(72) Inventor: Kato, Hiroyuki, Haga-Gun, Tochigi-Ken (JP)
(74) Representative: Stagg, Diana Christine

(57) **Abstract**

To provide a fastener for wire harness, which is formed to be one-piece and is capable of firmly holding a member having a large diameter as well as small diameter.

A fastener 1 has a body 6 to come into contact with a part of the periphery of a wire harness 3, and an arm 12 whose one end is connected to the body via hinge 8 and the other end is provided with an engagement portion 10 to come into engagement with an engagement portion 9 of the body, the arm bending so as to form a ring in association with the body. The arms are formed with a first holding member 21 extending from a point close to the hinge 8 along the arm. The body 6 is formed with a second holding member 25 which extends from the body to get between the arm and the first holding member 21 when the arm is engaged with the body. Each of the holding members is tapered to the thinner toward the end. When the arm is in engagement with the body, the two holding members are positioned between such a member as the wire harness and the arm.

## Description

### Field of the Invention

The present invention relates to a fastener to hold an elongated member such as a wire harness, and particularly to a fastener for wire harness comprising a body to come into contact with the outer surface of the elongated member and an arm which is connected via a hinge with the body and is provided with, on its free end, an engagement portion to come into engagement with an engagement portion of the body, the arm bending so as to form a ring in association with the body when the arm is in engagement with the body.

### Background of the Invention

Japanese U.M. Publication No. 2-40371, for example, discloses a fastener comprising a body to hold an elongated member such as a wire harness or a pipe by coming in contact with the outer surface of an elongated member, and an arm which is connected to the body via a hinge. The arm is provided with, on a free end thereof, an engagement portion to engage with an engagement portion of the body, and is bent to form a ring in association with the body when it is in engagement with the engagement portion of the body. This publicly known fastener is convenient in that the arm is provided with a holding member to press the wire harness toward the body so that wire harnesses having different diameters can be held. Besides this fastener, the ones disclosed in Japanese Patent laid-Open No. 55-79264 and Japanese U.M. Publication No. 4-5754 are capable of holding wire harnesses regardless of their diameters.

Among the publicly known fasteners stated above, the one described in U.M. Publication No. 2-40371 has the drawback that a space left between the holding member and the arm causes the wire harness to be displaced when a larger force to open than the holding force of the holding member is exerted on the holding member due to vibrations of the vehicle, body or the like. The fastener described in Patent Laid-Open No. 55-79264 has a pair of coupling arms respectively having serrated teeth to mesh with each other and a wire harness or the like is held between the paired coupling arms. When a large-diameter wire harness or the like is held, however, the depth of mesh between the serrated teeth is reduced to lower the coupling strength. On the contrary, if a small-diameter wire harness or the like is held, the teeth mesh with each other so deeply that a high inserting force is required to couple the arms. In addition, the arms are in such a configuration that they are disengaged by being slid to either side and this gives rise to the drawback that they tend to get disengaged easily. Further, the fastener described in U.M. Publication No. 4-5764 has a body and a holding member as separate parts and it holds a wire harness or the like when the holding piece is pressed in by bringing it into mesh with the body. Since the holding piece has to be connected to the body by inserting each end of the former into the latter, the work requires time and is troublesome. Another disadvantage is that the fastener no longer functions if its holding piece is missing.

Accordingly, the present invention aims to provide a fastener for wire harness which is one-piece and is capable of firmly holding large-diameter wire harnesses as well as small-diameter ones.

In order to achieve the above-described object, according to the present invention, there is provided a fastener for wire harness comprising a body to come into contact with a portion of the outer surface of an elongated member such as a wire harness so as to hold the member, and an arm connected to the body at one end with a free end at the other end having an engagement portion to engage with an engagement portion of the body, the arm bending so as to form a ring in association with the body when the arm is in engagement with the engagement portion of the body; characterized in that the arm is formed with, on a side facing the body, a first holding member extending from a point close to a hinge connection between the arm and the body along the arm toward the free end of the arm, and the body is formed with a second holding member extending from the engagement portion of the body to make an extension of the body which is positioned between the arm and the first holding member when the ring is formed by the arm in engagement with the body, the first and the second holding members respectively formed to be thinner toward the ends thereof, the two holding members being positioned between the member such as a wire harness and the arm when the arm is in engagement with the body.

### Brief Description of the Drawings

Fig 1 is a plan view of a fastener for wire harness according to the present invention.

Fig. 2 is a front view of the fastener of Fig. 1.

Fig. 3 is a bottom view of the fastener of Fig. 1.

Fig. 4 is a left side view of the fastener of Fig. 1.

Fig. 5 is a right side view of the fastener of Fig. 1.

Fig. 6 is a section view taken along the line A-A of Fig. 2.

Fig. 7 is a perspective view showing the fastener for wire harness according to the present invention to use.

Fig. 8 is a drawing showing a large-diameter wire harness held by the fastener for wire harness according to the present invention.

Fig. 9 is a drawing showing a small-diameter wire harness held by the fastener for wire harness according to the present invention.

### Description of a Preferred Embodiment

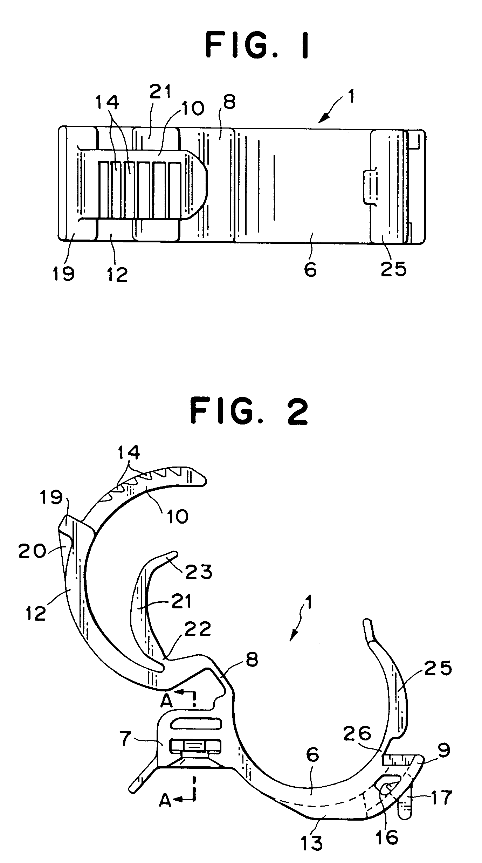

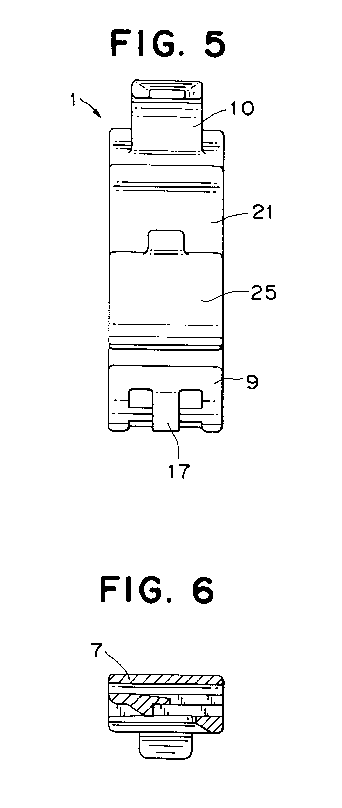

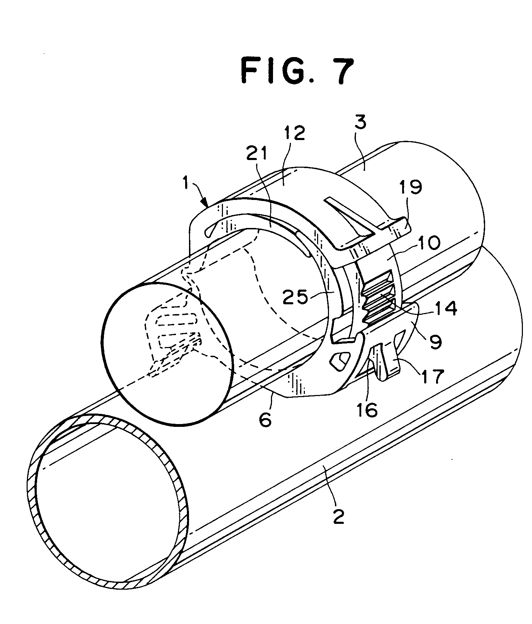

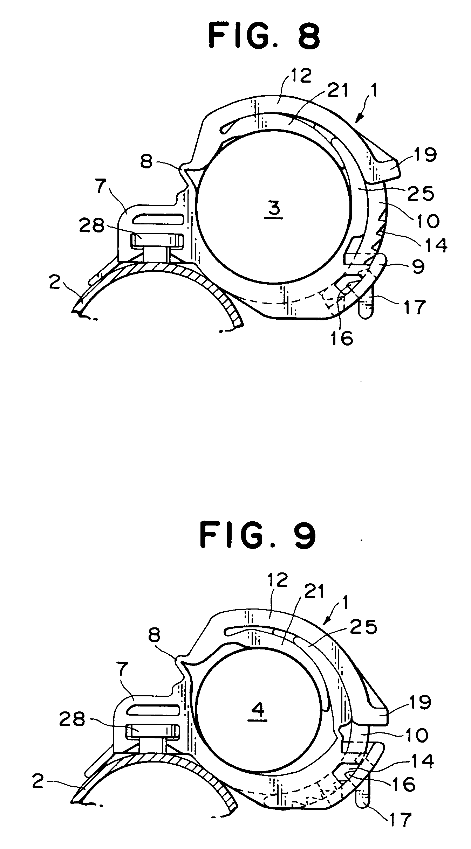

The present invention is described further by way of an embodiment, referring to accompanying drawings. Figs. 1 through 6 show a fastener 1 for an elongated member such as a wire harness according to the present invention. Fig. 7 shows a wire harness 3 mounted on a pipe 2 by means of the fastener 1. Fig. 8 shows the fastener 1 holding the large-diameter wire harness 3 while Fig. 9 shows a small-diameter wire harness 4 is held by the fastener 1. The fastener 1 has a body 6 which comes into contact with the outer surface of the wire harness when it bends so as to hold the wire harness. The body 6 is provided with a T-stud engagement portion 7 as attachment means to attach the body to a panel such as a vehicle body. Further, the fastener 1 is provided with an arm 12 whose one end is connected to the body 6 via a hinge 8 and the other end, which is to be a free end, is formed with a serrated engagement portion 10 to come into engagement with an engagement portion or catch 9 of the body. The arm 12 is curved so as to form a ring in association with the body 6 when the serrated engagement portion 10 is in engagement with the engagement portion 9 of the body. The T-stud engagement portion 7 as attachment means receives the head of a T-stud (See Figs. 8 and 9) secured to a panel and fixes the stud when slid. Inasmuch as its structure is commonly known as seen in Figs. 2, 3 and 6, explanation is skipped. The attachment means is not limited to a T-stud engagement portion; it may be one that can be attached to a threaded stud secured to a panel on an anchor-legged engagement portion that can be attached when inserted into a panel hole. The attachment means is not even indispensable and the fastener can do without it. Along both side edges of the back of the body 6, ribs 13 are formed for reinforcement.

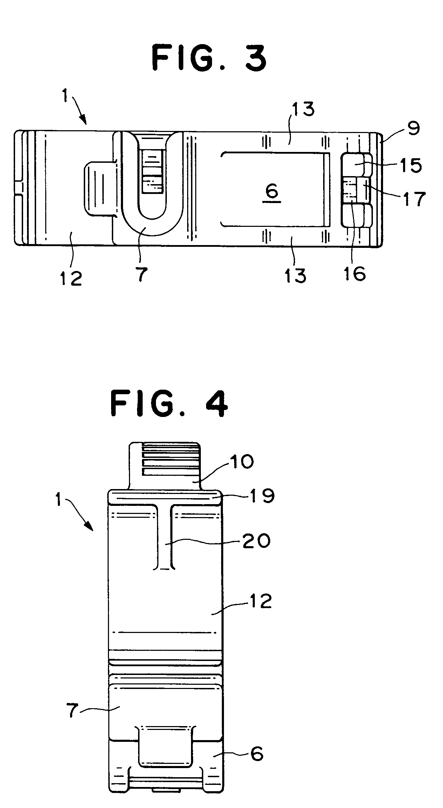

The engagement portion 9 of the body and the engagement portion 10 of the arm are described further in detail. The engagement portion 10 of the arm, which is a band having a smaller width than the arm, extends elongatedly from the end of the arm 12 and its surface is serrated to have multistage engagement grooves 14. The engagement portion 9 of the body has a hole 15 (See Fig. 3) to receive the band like engagement portion 10 of the arm. In the hole 15, an engagement pawl 16 is formed to engage with one of the engagement grooves 14 of the band-like engagememt portion 10 of the arm. The engagement pawl 16 is provided with a finger catch 17, Therefore, when the engagement portion 10 of the arm is inserted into the hole 15 of the engagement portion 9 of the body, one of the engagement grooves 14 comes into engagement with the engagement pawl 16 and the body 6 and the arm 12 associatively form a ring, in which the wire harness is held. This engagement can be released when the finger catch 17 is drawn to the left in Fig. 1. With this simple action, the engagement pawl 16 gets out of the engagement groove 14 to allow the engagement portion 10 of the arm to be detached from the engagement portion 9 of the body. In a boundary area between the arm 12 and the arm engagement portion 10, a stopper 19 is formed to prevent the arm engagement portion 10 from further getting into the body engagement portion 9. On the top surface of the arm 12, a rib 20 is formed to reinforce the stopper 19 and the arm 12.

On the side facing the body 6, the arm 12 is provided with a band-like first holding member 21 extending along the arm 12 from a point close to the hinge 8 toward the free end of the arm, or the engagement portion 10 of the arm. The first holding member 21 is positioned between the arm 12 and the wire harness when the arm 12 holds the wire harness. Being made of a flexible and elastic material, the first holding member can bend correspondingly to a wire harness it holds. As shown in Fig. 2, a base portion of the first holding member 21 is formed as a thin hinge 22 so as to pivot relatively to the arm 12. The first holding member 21 is tapered to be thinner toward the end and an end portion 23 is crooked to be closer to the body 6. This widens the space between the first holding member and the arm 12, or the engagement portion 10 of the arm to allow a second holding member (to be described later) to be inserted reliably.

The body 6 is formed with a second holding member 25 extending from the engagement portion 9 of the body to make an extension of the body. The second holding member 25 extends to be positioned between the arm 12 and the first holding member 21 when a ring has been formed by the engagement portion 9 of the body 6. The second holding member 25 is also made of a flexible and elastic material so that it can be bent along the outer surface of a wire harness held by it. Likewise, as shown in Fig. 1, a base portion of the second holding member 25 is formed as a thin hinge 26 to be easily bent to the body 6 easily. A portion adjacent to the hinge 26 is formed thick but tapered to be thinner toward the end. An end portion 27 is formed as a guide which is bent upwardly and is small in width.

How to hold the wire harness 3 by means of the fastener 1 is described with reference to Fig. 7. To begin with the wire harness 3 or the body 6 of the fastener 1 is positioned so that the wire harness 3 can be held by the body 6. Next, the arm 12 is rotated about the hinge 8 and the engagement portion 10 of the arm is inserted into the hole of the engagement portion 9 of the body. When the arm engagement portion 10 is forced into the body engagement portion, 9 while pressing the stopper 19 of the arm with a finger, one in the most suitable position among the multistage engagement grooves 14 of the arm engagement portion 10 engages with the engagement pawl 16 of the body engagement portion 9 and the wire harness 3 is kept in a firmly held state. Since the first holding member 21 extends along the arm 12 and the second holding member 25 is formed as the extension of the body as described earlier, the first holding member 21 and the second holding member 25 are inserted between the arm 12 and the wire harness 3 and between the engagement portion 10 of the arm 12 and the wire harness 3, respectively. Further, an end portion of the second holding member 25 gets between the arm 12 and an end portion of the first holding member 21 and both end portions overlap as seen in Fig. 7. The length of the second holding member 25 overlapping the first holding member 21 depends on the diameter of a wire harness hold. It is short when the large-diameter wire harness 3 of Fig. 8 is held but it is long in the case of the small-diameter wire harness of Fig. 9.

As discussed above, the length of the second holding member 25 overlapping the first holding member 21 is short in the case of the large-diameter wire harness 3 of Fig. 8 but long in the case of the small-diameter wire harness of Fig. 9. The radial size, i.e., the thickness of the wire harness and the arm changes correspondingly to the length of overlapping. Since both of the first holding member 21 and the second holding member 25 are tapered to be thinner toward their ends, the overlapping portion of the two members becomes thicker as the harness diameter becomes smaller. Therefore, the amount of the insertion of the engagement portion 10 of the arm into the engagement portion 9 of the body can remain less. Moreover, unlike the one disclosed in U.M. Publication No. 2-40371, no space is left between the arm 12 and the wire harness 3 so that the wire harness can be held tightly.

The wire harness 3 can be attached to the pipe by holding the T-stud engagement portion 7 on a T-stud 28 secured to the pipe 2 and sliding the fastener 1 as shown in Figs. 8 and 9. It may be attached either before or after the wire harness is held by the fastener 1. The wire harness can be removed from the fastener 1 when the finger catch 17 of the engagement portion 9 of the body is pulled with a finger to disengage the engagement pawl 16 from the engagement groove 14 and the arm is rotated to be opened after the arm engagement portion 10 is drawn out of the body engagement portion 9.

Since the fastener for wire harness according to the present invention is formed with a first holding member extending along the arm and a second holding member extending from the body to be inserted between the arm and the first holding member when the arm is in engagement with the body, and both holding members, tapered to be thinner toward their ends, being positioned between a member such as a wire harness and the arm while the arm is in engagement with the body so that as the diameter of the member becomes smaller, the overlapping portion of the two holding members becomes thicker to reduce the amount of insertion of the arm engagement portion into the body engagement portion, and a space between the arm and the member is done away with, resulting in firm holding of the wire harness. Thus, wire harnesses in a wide range of diameters can be held firmly and stably at a high level of strength. The mounting operation is as simple as just rotating the arm into the engagement portion of the body, Besides, the fastener being a one-piece product, it can do without separate machining and care to prevent either one of the parts from missing as required of a two-piece fastener.

## Claims

1. A fastener for wire harness comprising
a body to come into contact with a portion of the outer surface of an elongated member such as a wire harness to as to hold the member, said body having an engagement catch thereon;
an arm connected to said body by an intermediate hinge connection with a free end at the other end, having said free end an engagement portion to engage with said engagement catch, said arm bending so as to form a ring in association with said body when said arm is in engagement with said engagement catch;
said arm being formed, on a side facing said body, with a first holding member extending from a point close to said hinge connection in the direction of said free end of said arm, and said body being formed with a second holding member extending from said engagement catch, said holding member being positioned between said arm and the first holding member when the ring is formed by said arm in engagement with said body, said first and second holding members respectively formed to be thinner toward the ends thereof, said holding members being positioned between the member being held and said arm when said arm in engagement with said body.
